Europäisches Patentamt

European Patent Office

Office européen des brevets

(19)

(11) Numéro de publication: **0 089 256**
**B1**

(12) **FASCICULE DE BREVET EUROPÉEN**

(45) Date de publication du fascicule du brevet:
03.09.86

(51) Int. Cl.⁴: **D 06 F 75/14,** C 02 F 5/08

(21) Numéro de dépôt: **83400380.8**

(22) Date de dépôt: **24.02.83**

(54) **Produit destiné à empêcher l'entartrage dans les fers à repasser et les chaudières et utilisation de ce produit.**

(30) Priorité: **26.02.82 FR 8203201**

(43) Date de publication de la demande:
**21.09.83 Bulletin 83/38**

(45) Mention de la délivrance du brevet:
**03.09.86 Bulletin 86/36**

(84) Etats contractants désignés:
**BE CH DE GB IT LI LU NL**

(56) Documents cité:
**AU-A-406 241**
**FR-A-1 391 390**
**FR-A-2 034 005**
**FR-A-2 157 061**

(73) Titulaire: **Lagier, Pierre, 10 rue Lucien Bellivier,
F-94130 Nogent- sur- Marne (FR)**
Titulaire: **Foucart, Patrick, Moulin de la Ville,
F-95700 Duvy (FR)**

(72) Inventeur: **Lagier, Pierre, 10 rue Lucien Bellivier,
F-94130 Nogent- sur- Marne (FR)**
Inventeur: **Foucart, Patrick, Moulin de la Ville,
F-95700 Duvy (FR)**

(74) Mandataire: **Tony- Durand, Serge, Cabinet Tony-
Durand 22, Boulevard Voltaire, F-75011 Paris (FR)**

LIBER, STOCKHOLM 1986

## Description

La présente invention a pour objet un produit industriel destiné à empêcher l'entartrage dans les fers à repasser à vapeur, les chaudières à vapeur pour pressing, et les chaudières industrielles à vapeur.

On sait que dans les fers ou machines à repasser, la vapeur est produite à partir d'eau distillée introduite sous cette forme ou obtenue par un système échangeur d'ions adapté au fer. En effet, l'utilisation d'eau ordinaire provoque le dépôt à l'intérieur du fer de calcaire qui au bout d'un certain temps rend le fer inutilisable par obstruction des conduites et des trous de projection de la vapeur. Il faut alors procéder à des détartrages périodiques, qui sont évités par l'emploi d'eau distillée. Mais l'obtention de celle-ci constitue une contrainte onéreuse, puisque l'eau ordinaire ne peut être utilisée.

Par ailleurs, l'empesage du linge à repasser peut être obtenu par immersion du linge dans une solution d'amidon ou par projection d'amidon à partir d'une bombe.

L'invention a pour but de proposer un produit qui, mis en solution dans l'eau ordinaire permet d'utiliser celle-ci dans un fer ou une machine à repasser, ou encore dans une chaudière sans provoquer d'entartrage dans le fer ou dans la chaudière.

Un autre but de l'invention consiste à réaliser un produit en solution aqueuse, qui pénètre le linge à repasser et en assure l'empesage, tout en développant une action bactériostatique et de préférence en le parfumant légèrement.

Selon l'invention, le produit industriel comprend le mélange suivant en solution aqueuse:
   a) un acide ou un sel complexant
   b) un corps détartrant et complexant
   c) un agent mouillant
   d) un émulsionnant
   e) un inhibiteur de corrosion.

Dans le cas où cette solution aqueuse est destinée aux fers ou aux machines à repasser le linge, le mélange comprend en outre un agent filmogène et de préférence un parfum.

Les essais effectués ont montré que ce mélange en solution aqueuse empêche effectivement tout entartrage du réservoir du fer ou de la chaudière, par complexation du calcaire qui est maintenu en solution.

On donnera ci-après divers exemples de constituants utilisables dans le mélange aqueux visé par l'invention.

1. L'acide est choisi à un Ph inférieur à 5, et peut être pris dans le groupe suivant: acide minéral très dilué notamment acide phosphorique, acide sulfamique, acide organique notamment l'acide citrique, l'acide maléique, l'acide tartrique, l'acide acétique.

2. Le complexant a pour fonctions de s'opposer à l'action néfaste des ions Ca + + et Mg + +, et forme des complexes stables et solubles ayant perdu leurs aptitudes réactionnelles.

Les corps complexants et détartrants peuvent être:
   a) Des sels disodiques ou des tétrasodiques de l'EDTA (Acide Etyléne Diamine Tétrasodique), l'EDTA, qui ont une structure stable à la chaleur et ne sont pas hydrolysables.
   b) Des polyphosphates, qui possèdent des propriétés séquestrantes et inhibitrices, et un pouvoir de redissolution du tartre particulièrement sur les tissus. A titre d'exemple particulièrement approprié, on citera le tripolyphosphate. A froid l'action de ces sels est lente, cette lenteur étant rapidement supprimée à température suffisante. L'adjonction de sels disodiques de l'EDTA stabilise les polyphosphates et élargit leurs domaines de séquestration.
   c) D'autres sels comme les glutamates, les gluconates, les glucoheptonates, ou les boroheptonates, peuvent encore être utilisés.

3. L'agent mouillant est du type cutrénique, par exemple un sel d'ammonium quaternaire, le chlorure d'alyldiméthylbenzyl, le chlorure ou le sulfate de laurylpéridinium.

L'agent mouillant nécessaire à l'imprégnation du produit selon l'invention dans le tissu, et les agents ci-dessus susceptibles d'être utilisés ont l'avantage d'être bactériostatiques et de constituer de puissants inhibiteurs des moisissures à des doses très faibles, par exemple 0,5 à 1 g par litre.

4. L'agent émulsionnant est du type à condensation de l'oxyde d'éthylène sur des chaînes grasses, par exemple un oléate complexe de polyéthylèneglycol. Cet émulsionnant crée une émulsion non ionique par condensation de l'oxyde d'éthylène sur une chaîne grasse.

5. Comme inhibiteur de corrosion, on peut utiliser la thio-urée, ou le butyne 1,4 diol, ou l'alcool propargylique.

6. L'agent filmogène peut être de l'amidon, mais ce produit est difficile à maintenir en suspension, ou bien le moviol, des acétates, de l'acide borigue, l'agar agar, l'amidon, ou des mélanges de ces composants, qui ont donné les résultats les plus concluants.

Enfin le parfum peut être mélangé au sel ammonium quaternaire, stable en milieu acide et alcalin et qui stabilise le parfum, ce produit étant également bactériostatique.

A titre d'exemple indicatif, on donnera la composition suivante pouvant être utilisée dans un fer à repasser à vapeur:

**PRODUIT CONCENTRE POUR UN LITRE D'EAU**

Tripolyphosphate de soude 60 g
Ulylédiamine tétra acétigue sel disodique 10 g
Acide borique 20 g
Moviol 80 g
Oléate complexe de polyéthylèneglycol 5 ml
Chlorure de Laurylpéridinium 3 ml

Phénoxyéthunal 5 ml
Parfum 2 ml

Ce mélange en solution aqueuse est à utiliser entre 30 et 40 degrés C.

Dans un fer à repasser, le produit selon l'invention évite non seulement l'entartrage de l'intérieur du fer, mais aussi l'encrassage de la semelle extérieure de celle-ci.

En effet, grâce à l'agent filmogène combiné à l'agent mouillant, les saletés ne s'accrochent plus au fer qui glisse plus facilement sur le tissu.

Le produit selon l'invention peut être utilisé ou bien pur, ou bien avec adjonction d'eau ordinaire pour l'humidification du linge.

Un autre avantage du produit visé par l'invention est qu'il permet de remplacer la bombe à amidon classique pour empeser le linge puisqu'il permet de réaliser l'empesage et le repassage en une seule opération, grâce au jet de vapeur sortant du fer.

En outre, les vêtements repassés ont un pouvoir bactériostatique, et sont éventuellement parfumés.

L'invention n'est pas limitée aux exemples décrits ci-dessus et peut comporter de nombreuses variantes d'exécution, tous autres constituants que ceux mentionnés ci-dessus mais ayant les mêmes fonctions dans le mélange pouvant être utilisés dans le cadre défini par les revendications.

## Revendications

1. Produit industriel destiné à empêcher l'entartrage dans les fers à repasser à vapeur, les chaudières à vapeur pour pressing et les chaudières industrielles à vapeur, caractérisé par le fait qu'il comprend le mélange suivant pur ou en solution aqueuse:
   a) un acide ou un sel complexant
   b) un corps détartrant et complexant
   c) un agent mouillant
   d) un émulsionnant
   e) un inhibiteur de corrosion

2. Produit selon la revendication 1, destiné plus particulièrement aux fers à repasser à vapeur et aux chaudières pour pressing, caractérisé en ce qu'il comprend en outre un agent filmogéne.

3. Produit selon la revendication 2, caractérisé en ce qu'il comprend un parfum.

4. Produit selon l'une des revendications 1 à 3, caractérisé en ce que l'acide est choisi à un Ph inférieur à 5, et peut être pris dans le groupe suivant: acide minéral très dilué, notamment acide phosphorique, acide sulfamique, acide organique, notamment l'acide tartrique, l'acide citrique, l'acide maléique, l'acide acétique.

5. Produit selon l'une des revendications 1 à 4, caractérisé en ce que le détartrant et complexant est l'un des suivants: sels disodiques ou tétrasodique de l'EDTA, l'EDTA, polyphosphates, glutamates, gluconates, glucoheptonates, boroheptonates.

6. Produit selon l'une des revendications 1 à 5, caractérisé en ce que l'agent mouillant est du type cutrénique, notamment un sel d'ammonium quaternaire, le chlorure d'alyldiméthylbenzyl, le chlorure ou le sulfate de laurylpéridinium.

7. Produit selon l'une des revendications 1 à 6, caractérisé en ce que l'émulsionnant est du type a condensation de l'oxyde d'éthylène sur des chaînes grasses, par exemple un oléate complexe de polyéthylèneglycol.

8. Produit selon l'une des revendications 1 à 7, caractérisé en ce que l'inhibiteur de corrosion est la thio-urée, ou le butyne 1,4 diol, ou l'alcool propargylique, le parfum pouvant être mélangé au phénotyéthanol.

9. Utilisation du produit selon l'une des revendications 1 à 8 pour empêcher l'entartrage dans les fers â repasser à vapeur, les chaudières à vapeur de pressing, les chaudières industrielles à vapeur.

## Patentansprüche

1. Industrieerzeugnis zur Verhinderung des Kesselsteinansatzes in den Dampfbügeleisen den Dampfkesseln für Schnellreinigungsgeschafte und den industriellen Dampfkesseln dadurch gekennzeichnet, dass es folgende Mischung rein oder in einer Wasserlösung enthält:
   a. eine Säure oder ein komplexbildendes Salz,
   b. einen kesselsteinlösenden und komplexbildenden Körper,
   c. ein Netzmittel,
   d. ein Emulgierungsmittel,
   e. ein Korrosionshemmungsmittel.

2. Erzeugnis nach Anspruch 1, besonders für Dampfbügeleisen und Dampfkessel von Schnellreinigungsgeschäften, dadurch gekennzeichnet, dass es ausserdem einen Filmbildner enthält.

3. Erzeugnis nach Anspruch 2, dadurch gekennzeichnet, dass es einen Duftstoff enthält.

4. Erzeugnis nach einem der Ansprüche 1 - 3, dadurch gekennzeichnet, dass die Säure mit einem pH unter 5 gewählt wird und aus folgender Gruppe entnommen werden kann: sehr verdünnte Mineralsäure, besonders Phosphorsäure, Sulfaminsäure, organische Säure, besonders Weinsäure, Zitronensäure, Maleinsäure, Essigsäure.

5. Erzeugnis nach einem der Ansprüche 1 - 4, dadurch gekennzeichnet, dass das kesselsteinlösende und komplexbildende Mittel eines der folgenden Mittel ist: Dinatrium- oder Tetranatriumsalze der EDTA, die EDTA, Polyphosphate, Glutamate, Gluconate, Glucoheptonate, Boroheptonate.

6. Erzeugnis nach einem der Ansprüche 1 - 5, dadurch gekennzeichnet, dass das Netzmittel von cutrenischem Typ ist, besonders ein quartäres Ammoniumsalz, das Alyldimethylbenzylchlorid, das Laurylperidinumchlorid oder -sulfat.

7. Erzeugnis nach einem der Ansprüche 1 - 6, dadurch gekennzeichnet, dass das Emulgierungsmittel vom Typ mit Kondensation des Äthylenoxids auf fetten Ketten zum Beispiel ein komplexes Oleat des Polyäthylenglykols ist.

8. Erzeugnis nach einem der Ansprüche 1 - 7, dadurch gekennzeichnet, dass das Korrosionshemmungsmittel der Thioharnstoff oder das Butyn-1,4-Diol oder der Propargylalkohol ist, wobei der Duftstoff mit dem Phenotyäthanol gemischt werden kann.

9. Verwendung des Erzeugnisses nach einem der Ansprüche 1 - 8 zur Verhinderung des Kesselsteinansatzes in den Dampfbügeleisen, den Dampfkesseln für Schnellreinigungsgeschäfte und den industriellen Dampfkesseln.

**Claims**

1. Industrial product which is intended to prevent scale formation in steam irons, steam boilers for dry cleaning and industrial steam boilers, characterized in that it comprises the following mixture, either pure or in aqueous solution:
   a) an acid or a complexing salt
   b) a descaling and complexing substance
   c) a wetting agent
   d) an emulsifier
   e) a corrosion inhibitor

2. Product in accordance with claim 1, which is more particularly intended for steam irons and boilers for dry cleaning, characterized in that it further comprises a film-forming agent.

3. Product in accordance with claim 2, characterized in that it comprises a perfume.

4. Product in accordance with one of claims 1 to 3, characterized in that the acid is chosen at a pH below 5 and can be taken from the following group: highly dilute mineral acid, especially phosphoric acid, sulfamic acid, organic acid, especially tartaric acid, citric acid, maleic acid, acetic acid.

5. Product in accordance with one of claims 1 to 4, characterized in that the descaling and complexing agent is one of the following: disodium or tetrasodium salts of EDTA, EDTA polyphosphates glutamates, gluconates, glucoheptonates, boroheptonates.

6. Product in accordance with one of claims 1 to 5, characterized in that the wetting agent is of the cutrenic type, especially a quaternary ammonium salt, alyldimethylbenzyl chloride, laurylperidinium chloride or sulphate.

7. Product in accordance with one of claims 1 to 6, characterized in that the emulsifier is of the type involving condensation of ethylene oxide on fatty acid chains, for example a complex oleate of polyethyleneglycol.

8. Product in accordance with one of claims 1 to 7, characterized in that the corrosion inhibitor is thiourea or butyne 1,4 diol or propargyl alcohol, and the perfume can be mixed with phenoxyethanol.

9. Utilization of the product in accordance with one of claims 1 to 8 for preventing scale formation in steam irons, dry-cleaning steam boilers, industrial steam boilers.